# EUROPÄISCHE PATENTSCHRIFT

(11) **EP 3 802 454 B1**
(45) Veröffentlichungstag und Bekanntmachung des Hinweises auf die Patenterteilung: **11.09.2024**
(21) Anmeldenummer: 19752078.6
(22) Anmeldetag: 31.05.2019
(51) Int. Cl.: C03C 25/68, D02G 1/16

(54) **VERFAHREN ZUR HERSTELLUNG VON MINERALISCHEN HOCHTEMPERATURFASERN MIT EINEM HOHEN ANTEIL AN SILIZIUMDIOXYD**
METHOD FOR PRODUCING HIGH-TEMPERATURE MINERAL FIBRES WITH A HIGH PROPORTION OF SILICON DIOXIDE
PROCÉDÉ DE PRODUCTION DE FIBRES MINÉRALES HAUTE TEMPÉRATURE CONTENANT UNE PART ÉLEVÉE DE DIOXYDE DE SILICIUM

(30) Priorität: 03.06.2018 DE 102018113166
(43) Veröffentlichungstag der Anmeldung: 14.04.2021
(73) Patentinhaber: Schierz, Claus, 09599 Freiberg (DE)
(72) Erfinder: Schierz, Claus, 09599 Freiberg (DE)
(74) Vertreter: Schied, Sebastian
(86) Internationale Anmeldenummer: PCT/DE2019/100483
(87) Internationale Veröffentlichungsnummer: WO 2019/233525

(56) Entgegenhaltungen:
- WO-A1-2006/079542
- GB-A- 824 972
- US-A- 3 356 561
- US-A- 3 578 426

## Beschreibung

Verfahren zur Herstellung von mineralischen Hochtemperaturfasern mit einem hohen Anteil an Siliziumdioxyd für die Produktion von Mineralfaservlies, vorzugsweise zur Verwendung in Katalysatoren oder Schalldämpfern für Verbrennungsmotoren.

Durch eine Behandlung von Mineralfasern in einer speziellen Säurekonzentration können alkalische Bestandteile aus den Mineralfasern entzogen, geleacht werden. Als Resultat bleiben dem Glasfaserfilament nur die Bestandteile Siliziumoxid (SiO2) und Aluminiumoxid (Al2O3) übrig. Diese beiden Bestandteile verleihen dem Fasermaterial eine maximale Temperaturbeständigkeit von 1100 Grad C. Seit Mitte der 1950er Jahre sind dazu die Verfahren bekannt. So ist in dem Fachbuch "Industrielle Anorganische Chemie" vom Wiley-VCH Verlag unter dem Fachbegriff Polykieselsäurefasern als eine effiziente Methode, um textile hochtemperaturbeständige Fasern mit hohen Siliziumdioxidgehalten zu erhalten, die Behandlung von alkalimetall- oder boroxidreichen niedrigschmelzenden Textilglasfasern, z. B. A- oder E-Glasfasern, mit Säuren beschrieben. Die Textilglasfasern werden entweder über das Direktschmelzverfahren oder über das zweistufige Kugel- bzw. Pellet-Schmelzverfahren erzeugt. Mit Hilfe des säureinduzierten , diffusionskontrollierten Ionenaustauschprozesses an Si-OM-Glasnetzwerkgruppen können Fasern mit größer 99 % SiO2-Anteil erhalten werden. Dabei werden die einwertigen Alkalimetallionen als Glasnetzwerk-Trennstellenbildner wie Li-, Na- und K-Ionen fast vollständig, die zweifach geladenen Erdalkalimetallionen und die dreifach geladenen netzwerkbildenden Metallionen, mit Ausnahme des Bors, Al-Ionen nur in Spuren aus dem Glasgefüge gegen die Protonen der Säure ausgetauscht. Die Ionenaustauschreaktion von Alkali- oder Borionen gegen Wasserstoffionen an Si-OM-Netzwerkgruppen (M= Na, K, B) überführt das Glasnetzwerk in eine dreidimensional vernetzte Polykieselsäure. Der Schmelzpunkt der Fasern steigt infolge dieser Stoffwandlung in Abhängigkeit von der chemischen Zusammensetzung in den Temperaturbereich oberhalb 1400 Grad C.

Zum Aufbauschen von textilen Garnen sind sogenannte Effektgarne als Zier- oder Fantasiegarne bekannt, bei denen auf verschiedenen Fertigungswegen eine bewegte, unruhige oder ausdrucksstarke Oberflächenstruktur erzeugt wird. Dieses wird z. B. bei Effektzwirnen durch das Verzwirnen zweier oder mehrerer unterschiedlich starker Fäden auf einer Effektzwirnmaschine erreicht. Effektgarne lassen sich auch durch ungleiches Spinnen, durch Beimischen von Fremdfasern oder -Teilen, durch Farb- und Glanzeffekte sowie durch modifizierte Fertigungsschritte erzielen. Im Effektgarnbereich werden häufig Chemiefasern eingesetzt.

In der Schrift WO 2006/079542 A1 wird ein Verfahren und eine Vorrichtung zur Erzeugung einer periodischen Fadenauslenkung an einem Effektfaden bei der Herstellung eine Effektgarnes beschrieben. Hierbei wird ein Kernfaden mit einem Effektfaden zu dem Effektgarn kombiniert, wobei die Effektstellen an dem Effektgarn durch einen periodischen Aufbau und Abbau einer Fadenschlaufe mittels Auslenkung des Effektfadens zwischen zwei Fadenführern erzeugt werden. Um eine möglichst hohe Dichte an Effektstellen in dem Effektgarn zu erzeugen, wird die Fadenschlaufe des Effektfadens erfindungsgemäß durch eine rotierende Formscheibe mit einer asymmetrischen Außenkontur erzeugt, wobei der Faden quer zur Formscheibe geführt ist und durch die Außenkontur der drehenden Formscheibe ausgelenkt wird.

US3578426 betrifft im Kern die Befeuchtung von Glasfasern. Das Ätzen an der Oberfläche wird hier auch nur am Rande erwähnt und ist nicht Gegenstand der Anmeldung. Das Ätzen (Leaching) dient dazu, die spätere Anhaftung von (Kunst-) Harz zu verbessern. US3356561 betrifft Matten aus Fasern, die in Katalysatoren zum Einsatz kommen können. GB-824972 betrifft das Ätzen von Glasfasern.

Aufgabe der vorliegenden Erfindung ist es ein kostengünstigeres Verfahren gegenüber den bisherigen, bekannten Verfahren bei gleichzeitiger Sicherung einer hohen Qualität bei der Herstellung von Mineralfasern z. B. für den späteren Einsatz dieser Fasern in Mineralfaservliesstoffen für die Verwendung z. B. in Katalysatoren für Kraftfahrzeuge zu schaffen.

Überraschenderweise wurde festgestellt, dass aus handelsüblichen Glasfaserendlosfilamenten, vorzugsweise aus E-Glas, durch eine gezielte Veränderung der physikalischen Eigenschaften, z. B. durch Vergrößerung der Oberfläche und damit des Volumens und der Körperstruktur der Filamente und ein nachfolgendes, kurzzeitiges und schonendes Leaching eine solche chemische Veränderung zu erreichen ist, dass die Filamente ein Gerüst von gezielten 80 % bis 98 % SiO2 erreichen. Es entsteht dabei eine weiche, bauschige Faser mit einer guten Festigkeit, welche sich wesentlich besser zu Isolationsprodukten weiterverarbeiten lässt, als die handelsüblichen Silicafasern. Weiterhin wurde es erstmalig möglich auch Basaltendlosfilamente zu leachen, ebenfalls mit einem überraschenden Ergebnis für einen möglichen Einsatz bei der Mineralfaservliesherstellung.

Dieser ermittelte Gesamtprozess ermöglicht es, eine Vielzahl vom Markt angebotene Glasfaserprodukte zu veredeln bzw. zielgerichtet neue Eigenschaften für verschiedenste Produkte zu schaffen. Der neue Gesamtprozess ist gegenüber dem klassischen Silicaverfahren wesentlich kostengünstiger. Ein zweiter wesentlicher Unterschied zu den bisher bekannten Verfahren besteht darin, dass eine Vergrößerung des Volumens bei den Filamenten bereits vor dem chemischen Veredelungsverfahren vorgenommen wird. Dies ist wesentlich effektiver und schonender. Die Zerstörung der Filamente ist bei dem neuen Verfahren bei der Weiterverarbeitung um ca. 80 % geringer, wodurch im Endeffekt eine höhere Endfestigkeit z. B. bei der Mineralfaservliesherstellung erreicht wird.

Bei umfangreichen praktischen Versuchen wurden bisher folgende Glasfasertypen erfolgreich bearbeitet: E-Glas, C-Glas, D-Glas, ECR-Glas, R-Glas, AR-Glas, S-Glas, S-2-Glas A-Glas, und ebenfalls erfolgreich Basaltfilamente.

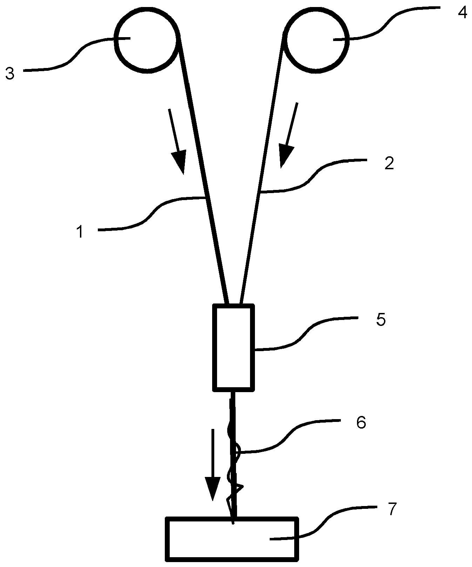

Vorteilhafte Ausführungsbeispiele der Erfindung werden anhand der Zeichnung näher erläutert. Die Zeichnung zeigt schematisch den Verfahrensablauf.

Von zwei Galetten 3 und 4, wobei die Galette 3 das Kernfilament 1 und die Galette 4 das Effektfilament 2 trägt, wird das Kernfilament 1 und das Effektfilament 2 der oder den Lufttexturierdüsen 5 zugeführt. Die Zuführung des Effektfilaments 2 erfolgt in einer größeren Geschwindigkeit als das Kernfilament 1. Hierdurch kommt es zu einem Aufbauschen des Effektfilaments 2 um das Kernfilament 1 im Bereich der Lufttexturierdüse 5 und es entsteht das sogenannte Effektgarn 6, welches ein wesentlich größeres Volumen als zwei nebeneinander liegende Filamente besitzt. Vorteilhaft hat sich ergeben, dass bei einer Verwendung des Effektgarnes 6 für eine Mineralfaservliesherstellung das Kernfilament 1 einen größeren Durchmesser als das Effektfilament 2 besitzt.

Die beiden Filamente Kernfilament 1 und Effektfilament 2 und damit im Endeffekt das Effektgarn 6 werden mittels spezieller Texturierdüsen 5 schonend texturiert (geöffnet). Dieses Texturieren ermöglicht im anschließenden Säurebad 7 ein schnelleres aber ebenso schonendes Leaching. Dies bedeutet weniger Filamentbrüche und somit bei der weiteren Verarbeitung im Endprodukt, z. B. in einem Mineralfaservlies, eine höhere Festigkeit.

In einer Variante des Verfahrens werden mehrere Effektfilamente 2, die von zusätzlichen Galetten zugeführt werden, verwendet.

An Stelle von Glasfilamenten können auch Basaltfilamente eingesetzt werden. Durch den hohen Anteil an Al2O3 im Basaltfilament, bis zu 20 %, wird eine noch höhere Temperaturbeständigkeit mit dem geleachten Faserprodukt erreicht (bis über 1100 Grad C).

Das in der Lufttexturierdüse 5 entstandene Effektgarn 6 wird nachfolgend nun dem Säurebad 7 zum Teilverfahren Leaching 7 zugeführt. Hier werden die alkalischen Bestandteile im Effektgarn 6 herausgelöst. Die Verweildauer im Säurebad 7 richtet sich nach Erfahrungswerten.

### Zusammenstellung der Bezugszeichen

- 1 -: Kernfilament
- 2 -: Effektfilament
- 3 -: Galette
- 4 -: Galette
- 5 -: Lufttexturierdüse
- 6 -: Effektgarn
- 7 -: Säurebad, Leaching

## Patentansprüche

1. Verfahren zur Herstellung von mineralischen Hochtemperaturfasern mit einem hohen Anteil an Siliziumdioxyd unter Verwendung von Glasfaserendlosfilamenten und/oder Basaltendlosfilamenten,
**dadurch gekennzeichnet,**
**dass** mindestens zwei Filamente als Kernfilament (1) und als Effektfilament (2) jeweils von einer Galette (3, 4) mit unterschiedlicher Geschwindigkeit zu einer oder mehreren Lufttexturierdüsen (5) geführt werden, dort eine Texturierung zu einem Effektgarn (6) erfolgt und dieses Effektgarn (6) anschließend einem Säurebad (Leaching) (7) unterzogen wird.

2. Verfahren zur Herstellung von mineralischen Hochtemperaturfasern nach Anspruch 1,
**dadurch gekennzeichnet,**
**dass** das Kernfilament (1) einen größeren Durchmesser besitzt als das Effektfilament (2).

3. Verfahren zur Herstellung von mineralischen Hochtemperaturfasern nach einem der vorhergehenden Ansprüche,
**dadurch gekennzeichnet,**
**dass** zur Herstellung des Effektgarnes (6) mehrere Effektfilamente (2) eingesetzt werden.

4. Verfahren zur Herstellung von mineralischen Hochtemperaturfasern nach einem der vorhergehenden Ansprüche, **dadurch gekennzeichnet,**
**dass** für das Kernfilament (1) und/oder für das Effektfilament (2) Basaltfilamente eingesetzt werden.

5. Verfahren zur Herstellung von mineralischen Hochtemperaturfasern nach einem der vorhergehenden Ansprüche,
**dadurch gekennzeichnet,**
**dass** für das Kernfilament (1) und für das Effektfilament (2) als Grundstoff E-Glas verwendet wird.

6. Verfahren zur Herstellung von mineralischen Hochtemperaturfasern nach einem der vorhergehenden Ansprüche,
**dadurch gekennzeichnet,**
**dass** das Effektgarn (6) solange geleacht wird, bis je nach dem Gehalt von Aluminiumoxid (Al2O3) ein Anteil von 96 % Siliziumdioxid (SiO2) erreicht ist.

7. Verfahren zur Herstellung von mineralischen Hochtemperaturfasern nach einem der vorhergehenden Ansprüche,,
**dadurch gekennzeichnet,**
**dass** auf das Effektgarn (6) nach dem Leaching thermisch aktivierbares Blähmittel aufgetragen wird.

8. Verwendung des nach den Ansprüchen 1 bis 7 hergestellten Effektgarnes (6) und einer Weiterverarbeitung zu einem Mineralfaservlies und dieser in Katalysatoren und/oder Schalldämpfern von Verbrennungsmotoren eingesetzt wird.

## Claims

1. Procedure for the production of mineral high-temperature fibres with a high proportion of silicon dioxide using continuous glass fibre filaments and/or continuous basalt filaments,
**characterised in**
**that** at least two filaments, as core filament (1) and as effect filament (2), are each fed at different speeds from a godet (3, 4) to one or more air texturing nozzles (5), where they are textured to form a fancy yarn (6) and this fancy yarn (6) is then subjected to an acid bath (leaching) (7).

2. Procedure for the production of insulating glass elements according to claim 1,
**characterised in**
**that** the core filament (1) has a larger diameter than the effect filament (2).

3. Procedure for the production of mineral high-temperature fibres according to one of the preceding claims,
**characterised in**
**that** several effect filaments (2) are used to produce the fancy yarn (6).

4. Procedure for the production of mineral high-temperature fibres according to one of the preceding claims,
**characterised in**
**that** basalt filaments are used for the core filament (1) and/or for the effect filament (2).

5. Procedure for the production of mineral high-temperature fibres according to one of the preceding claims,
**characterised in**
**that** E-glass is used as the base material for the core filament (1) and for the effect filament (2).

6. Procedure for the production of mineral high-temperature fibres according to one of the preceding claims,
**characterised in**
**that** the fancy yarn (6) is leached until, depending on the content of aluminium oxide (Al2O3), a proportion of 96% silicon dioxide (SiO2) is reached.

7. Procedure for the production of mineral high-temperature fibres according to one of the preceding claims,
**characterised in**
**that** a thermally activatable foaming agent is applied to the fancy yarn (6) after leaching.

8. Use of the fancy yarn (6) produced according to claims 1 to 7 and further processing into a mineral fibre fleece and its use in catalytic converters and/or silencers of internal combustion engines.

## Revendications

1. Procédé de production de fibres minérales haute température contenant une part élevée de dioxyde de silicium au moyen de filaments sans fin de fibre de verre et/ou de filaments sans fin de basalte,
**caractérisé en ce**
**qu'**au moins deux filaments sont acheminés en tant que filament central (1) et en tant que filament fantaisie (2) respectivement à partir d'un godet (3, 4) à des vitesses différentes vers une ou plusieurs buses (5) de texturisation par air où est effectuée une texturation pour obtenir un fil fantaisie (6), et ce fil fantaisie (6) est ensuite soumis à un bain acide (7) (lixiviation).

2. Procédé de production de fibres minérales haute température selon la revendication 1,
**caractérisé en ce**
le filament central (1) possède un diamètre plus important que le filament fantaisie (2).

3. Procédé de production de fibres minérales haute température selon l'une des revendications précédentes,
**caractérisé en ce**
plusieurs filaments fantaisie (2) sont utilisés pour la production du fil fantaisie (6).

4. Procédé de production de fibres minérales haute température selon l'une des revendications précédentes,
**caractérisé en ce**
des filaments de basalte sont employés pour le filament central (1) et/ou pour le filament fantaisie (2).

5. Procédé de production de fibres minérales haute température selon l'une des revendications précédentes,
**caractérisé en ce**
du verre E-Glas est employé comme matière première pour le filament central (1) et pour le filament fantaisie (2).

6. Procédé de production de fibres minérales haute température selon l'une des revendications précédentes,
**caractérisé en ce**
le fil fantaisie (6) est lixivié jusqu'à obtenir une proportion de 96 % de dioxyde de silicium (SiO2), en fonction de la teneur en oxyde d'aluminium (Al2O3).

7. Procédé de production de fibres minérales haute température selon l'une des revendications précédentes,
**caractérisé en ce**
**qu'**un agent gonflant à activation thermique est appliqué sur le fil fantaisie (6) après la lixivation.

8. Utilisation du fil fantaisie (6) produit selon les revendications 1 à 7 et transformation ultérieure de celui-ci en un non-tissé minéral, puis utilisation de ce dernier dans des catalyseurs et/ou des silencieux de moteurs à combustion.
